# EUROPEAN PATENT APPLICATION

(11) **EP 2 725 539 A1**
(43) Date of publication of application: **30.04.2014**
(21) Application number: 12802057.5
(22) Date of filing: 09.03.2012
(51) Int. Cl.: G06Q 30/02, G06F 3/048, G06F 13/00

(54) **INFORMATION PROVIDING DEVICE, INFORMATION PROVIDING METHOD, INFORMATION PROVIDING PROGRAM, INFORMATION DISPLAY PROGRAM, AND COMPUTER-READABLE RECORDING MEDIUM FOR STORING INFORMATION PROVIDING PROGRAM**

(30) Priority: 24.06.2011 JP 2011140544; 24.06.2011 JP 2011140545
(71) Applicant: Rakuten, Inc., Tokyo 140-0002 (JP)
(72) Inventor: NUMAZU Kenjiro, Tokyo 140-0002 (JP); SAKURAI Ruka, Tokyo 140-0002 (JP); MURATA Yusuke, Tokyo 140-0002 (JP)
(74) Representative: EIP
(86) International application number: PCT/JP2012/056188
(87) International publication number: WO 2012/176507

(57) **Abstract**

A web server 40 includes a keyword acquisition unit (43) that acquires first item information related to a first item shown on a web page displayed on a web browser of a user terminal (10), a related item acquisition unit (44) that acquires second item information indicating a second item (related item) related to the first item by referring to an item database (21) storing item information based on the first item information, and a related item transmitting unit (45) that transmits the second item information to the user terminal (10) so that the second item information is shown in a separate window displayed superimposed on the web page.

## Description

### Technical Field

One embodiment of the present invention relates to an information providing device, an information providing method, an information providing program, an information display program, and a computer-readable recording medium storing an information providing program.

### Background Art

A technique that presents items (related items) related to a specific item to a user is known. For example, the recommendation information generation device according to Patent Literature 1 described below stores first recommended item information that is extracted based on viewing history information of a user and second recommended item information that is extracted based on the first recommended item information in association with each other, generates first recommendation display information that causes the first recommended item information to be displayed on a user terminal and second recommendation display information that causes the second recommended item information to be displayed on the user terminal, and transmits those display information.

### Citation List

### Patent Literature

PTL 1: JP 2011-065217 A

### Summary of Invention

### Technical Problem

However, there is a case where display of related items is not easily viewable for a user. For example, because information about an item related to a specific item is displayed on the same web page as information about the specific item, the web page is not easy to view in some cases. For example, this causes the need for scrolling for some page layouts, the web page is not easy to look through in some cases. Further, when a page transition occurs when displaying related items, it causes inconvenience to a user who desires to continue to view the web page before the transition. It is thus desirable to enhance convenience in viewing related items.

### Solution to Problem

An information providing device according to one aspect of the invention includes a first item acquisition unit configured to acquire first item information related to a first item shown on a web page displayed on a web browser of a user terminal, a second item acquisition unit configured to acquire second item information indicating a second item related to the first item by referring to an item database storing item information based on the first item information, and an item information transmitting unit configured to transmit the second item information to the user terminal so that the second item information is shown in a separate window displayed superimposed on the web page.

An information providing method according to one aspect of the invention is an information providing method executed by an information providing device, the method including a first item acquisition step of acquiring first item information related to a first item shown on a web page displayed on a web browser of a user terminal, a second item acquisition step of acquiring second item information indicating a second item related to the first item by referring to an item database storing item information based on the first item information, and an item information transmitting step of transmitting the second item information to the user terminal so that the second item information is shown in a separate window displayed superimposed on the web page.

An information providing program according to one aspect of the invention causes a computer to implement a first item acquisition unit configured to acquire first item information related to a first item shown on a web page displayed on a web browser of a user terminal, a second item acquisition unit configured to acquire second item information indicating a second item related to the first item by referring to an item database storing item information based on the first item information, and an item information transmitting unit configured to transmit the second item information to the user terminal so that the second item information is shown in a separate window displayed superimposed on the web page.

A computer-readable recording medium according to one aspect of the invention stores an information providing program that causes a computer to implement a first item acquisition unit configured to acquire first item information related to a first item shown on a web page displayed on a web browser of a user terminal, a second item acquisition unit configured to acquire second item information indicating a second item related to the first item by referring to an item database storing item information based on the first item information, and an item information transmitting unit configured to transmit the second item information to the user terminal so that the second item information is shown in a separate window displayed superimposed on the web page.

An information display program according to one aspect of the invention causes a computer capable of communicating with an information providing device to implement a window display unit configured to display a separate window superimposed on a web page displayed on a web browser of the computer, and an information display unit configured to display information received from the information providing device in the separate window, wherein the information providing device includes a first item acquisition unit configured to acquire first item information related to a first item shown on a web page displayed on the web browser, a second item acquisition unit configured to acquire second item information indicating a second item related to the first item by referring to an item database storing item information based on the first item information, and an item information transmitting unit configured to transmit the second item information to the computer so that the second item information is shown in a separate window displayed superimposed on the web page, and the information display unit displays the second item information in the separate window.

According to the above aspect, while a first item is shown on a web page, a second item related to the first item is shown in a separate window that is displayed superimposed on the web page. In this manner, by displaying the second item (related item) not in the web page but in the separate window, a user can view the first item and the second item at the same time without performing any particular operation on the web page on which the first item is displayed. It is thereby possible to enhance convenience in viewing the related item.

In the information providing device according to another aspect, the item information stored in the item database may include shop information for identifying a shop where an item is available, the first item information may include first shop information for identifying a shop where the first item is available, and the second item acquisition unit may acquire the second item information indicating the second item available in the same shop as the first item based on the first item information. Accordingly, a related item that is available in the same shop is shown to a user, and it is thereby possible for the shop to prevent the user's attention from shifting to an item in another shop. Further, it is possible for a user to access a related item that is available in the same shop.

In the information providing device according to another aspect, the first item acquisition unit may determine whether the web page shows the first item by analyzing the web page, and acquire the first item information when determining that the web page shows the first item. It is thereby possible to prevent a related item search from being made on a web page on which the item is not shown.

In the information providing device according to another aspect, the first item acquisition unit may refer to a list of preset URLs for which the first item information is to be acquired, and determine that the web page shows the first item when an URL of the web page is included in the list. By using a list of URLs in this manner, determination as to whether the web page is related to the item can be made easily.

In the information providing device according to another aspect, the first item acquisition unit may determine that the web page shows the first item when a user interface for performing a purchase procedure of the first item is included in the web page. By determining whether the web page is related to the item based on the presence or absence of a predetermined interface, determination about the web page can be made dynamically.

In the information providing device according to another aspect, the first item acquisition unit may determine that the web page shows the first item when a predetermined word related to purchase of the first item is included in the web page. By determining whether the web page is related to the item based on the presence or absence of a predetermined word, determination about the web page can be made dynamically.

In the information providing device according to another aspect, the first item acquisition unit may specify a group of words frequently searched for by referring to a first history database storing a history of words entered by a user to search for an item in an item search service, and then acquire a word included in the group among words extracted based on description of the web page as the first item information. In this manner, by using a word frequently used in the item search service as the first item information, it is possible to acquire the second item (related item) using an appropriate word.

In the information providing device according to another aspect, the first item acquisition unit may include a presentation unit configured to transmit words extracted based on description of the web page as presented words to the user terminal, the first item acquisition unit may acquire a word specified based on the presented words in the user terminal as the first item information, and the presented words received by the user terminal may be shown in the separate window. In this manner, by allowing a user to select a word to be used for acquisition of a related item, it is possible to present a related item that is in line with the user's intention.

In the information providing device according to another aspect, the presentation unit nay specify a group of words frequently searched for by referring to a first history database storing a history of words entered by a user to search for an item in an item search service, and then determine words included in the group among words extracted based on description of the web page as the presented words. In this manner, by using words frequently used in the item search service as the presented words, it is possible to present appropriate words for acquisition of related items to a user.

In the information providing device according to another aspect, the presentation unit can refer to a second history database storing history information where user information for identifying a user, a web page acquired in past times by the first item acquisition unit, and a word based on the presented words acquired in past times by the first item acquisition unit are associated with one another, and when the history information corresponding to a user of the user terminal and the web page currently acquired by the first item acquisition unit is stored in the second history database, the presentation unit may transmit words indicated by the history information as the presented words to the user terminal. In this case, when a user accesses the same web page again, words on the basis of the presented words at the time when the user has accessed the web page in past times are transmitted to the user terminal, and it is thereby possible to perform determination of the presented words easily and promptly. Further, it is possible for the user to obtain the same words as before as the presented words.

In the information providing device according to another aspect, the presentation unit can refer to a second history database storing history information where user information for identifying a user, a web page acquired in past times by the first item acquisition unit, and a word based on the presented words acquired in past times by the first item acquisition unit are associated with one another, and when the history information corresponding to a user different from a user of the user terminal and the web page currently acquired by the first item acquisition unit is stored in the second history database, the presentation unit may transmit words indicated by the history information as the presented words to the user terminal. In this case, when a user accesses a specific web page, words on the basis of the presented words at the time when another user has accessed the web page in past times are transmitted to the user terminal, and it is thereby possible to perform determination of the presented words easily and promptly. Further, it is possible for the user to obtain the same words as those used in processing for another user as the presented words.

In the information providing device according to another aspect, the word based on the presented words acquired in past times may be a word specified in past times in a user terminal for the web page acquired in past times. Accordingly, the same words as those that a user has used in search for related items are transmitted to the user terminal as the presented words, and therefore it is possible to provide the presented words that are in line with the user's intention.

In the information providing device according to another aspect, the presented words shown in the separate window can be edited in the user terminal. This enables a user to freely set words to be used for acquiring the second item (related item).

In the information providing device according to another aspect, the second item acquisition unit may specify items viewed or purchased by a user of the user terminal in past times as accessed items by referring to a third history database storing history data indicating a history of viewing of item pages and purchase of items by a user, and then acquire the second item information indicating the second item related to both of the first item and the accessed items by referring to the item database based on the first item information and information indicating the accessed items. In this manner, by acquiring the second item information in consideration also of the items which a user who has accessed the web page has viewed or purchased in the past, it is possible to present a related item that matches the user's preference.

In the information providing device according to another aspect, at least a part of the second item information may be shown as a link to a web page of the second item in the separate window. With this link, a user can thereby easily access the web page of the related item.

In the information providing device according to another aspect, a user interface for selecting the second item as an item to be purchased may be further shown in the separate window. With this interface, a user can easily select the related item as an item to be purchased.

### Advantageous Effects of Invention

According to one aspect of the present invention, it is possible to enhance convenience in viewing a related item.

### Brief Description of Drawings

Fig. 1 is a diagram showing an overall configuration of an online shopping system according to a first embodiment.
Fig. 2 is a diagram showing a hardware configuration of each server shown in Fig. 1.
Fig. 3 is a block diagram showing a functional configuration of a shopping server shown in Fig. 1.
Fig. 4 is a diagram showing an example of item information.
Fig. 5 is a diagram showing an example of a web page.
Fig. 6 is a block diagram showing a functional configuration of a web server shown in Fig. 1.
Fig. 7 is a block diagram showing a configuration of a toolbar program according to the first embodiment.
Fig. 8 is a diagram showing an example in which related items are displayed in a toolbar.
Fig. 9 is a sequence chart showing a toolbar download process according to the first embodiment.
Fig. 10 is a sequence chart showing a related item display process according to the first embodiment.
Fig. 11 is a block diagram showing a configuration of an information providing program according to the first embodiment.
Fig. 12 is a block diagram showing a functional configuration of a web server according to a second embodiment.
Fig. 13 is a block diagram showing a configuration of a toolbar program according to the second embodiment.
Fig. 14 is a diagram showing an example in which presented words are shown in a toolbar.
Fig. 15 is a diagram showing an example in which related items are shown in a toolbar.
Fig. 16 is a diagram showing an example of an initial value of a keyword history.
Fig. 17 is a diagram showing an example of an updated keyword history.
Fig. 18 is a sequence chart showing a related item display process according to the second embodiment.
Fig. 19 is a block diagram showing a configuration of an information providing program according to the second embodiment.

### Description of Embodiments

An embodiment of the present invention is described hereinafter in detail with reference to the appended drawings. Note that, in the description of the drawings, the same or equivalent elements are denoted by the same reference symbols, and the redundant explanation thereof is omitted.

### (First embodiment)

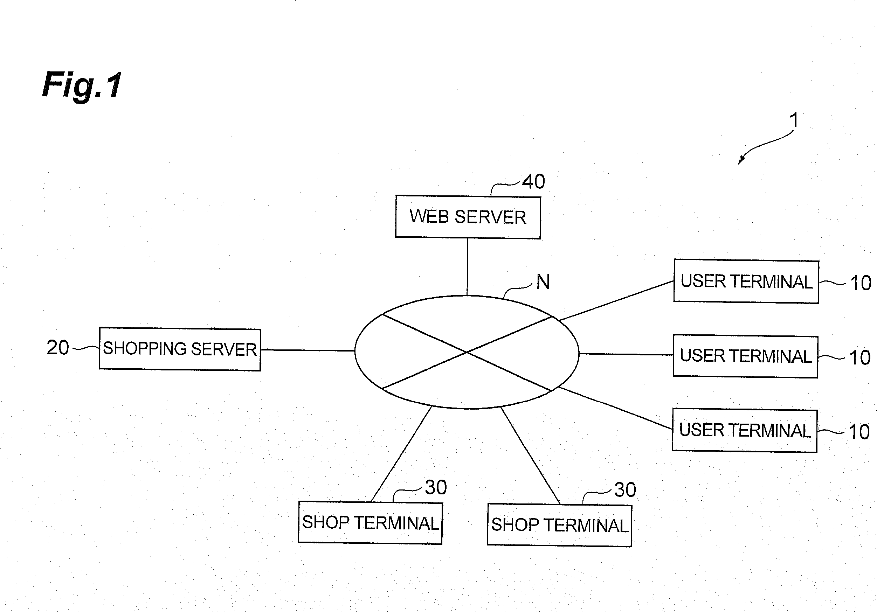

A first embodiment is described firstly with reference to Figs. 1 to 11. An online shopping system 1 according to the first embodiment is a computer system that provides item information to a user of a virtual shopping mall (online shopping site), receives a purchase order from the user and executes a purchase process. A user ID for identifying a user is assigned to a user who is registered as a member of an online shopping site. As shown in Fig. 1, the online shopping system 1 includes a user terminal 10, a shopping server 20, a shop terminal 30, and a web server 40. Those devices are connected with one another through a communication network N such as the Internet, and thereby one-way communication or two-way communication is implemented. Although three user terminals 10 and two shop terminals 30 are shown in Fig. 1, the number of the user terminals 10 and the shop terminals 30 in the online shopping system 1 is not particularly limited.

The user terminal 10 is a computer with a web browser. The user terminal 10 transmits a request signal (HTTP request) conforming to HTTP (Hypertext Transfer Protocol) to the shopping server 20 or the web server 40 and thereby requests a web page. Then, the user terminal 10 receives a web page transmitted from the shopping server 20 or the web server 40 in response to the HTTP request and displays the web page on the web browser. A user can thereby view or manipulate a desired web page. The user terminal 10 may be a sophisticated mobile phone (smartphone), a mobile phone, a personal digital assistant (PDA), a portable or stationary personal computer (PC) and the like, though the user terminal 10 is not limited thereto.

The shopping server 20 is a computer that provides a user with a virtual shopping mall where one or more shops are member shops. The shopping server 20 stores item information of each shop. Further, the shopping server 20 executes a variety of processing such as provision of various web pages (for example, an item page, an item search page etc.) and purchase processing based on the HTTP request from the user terminal 10.

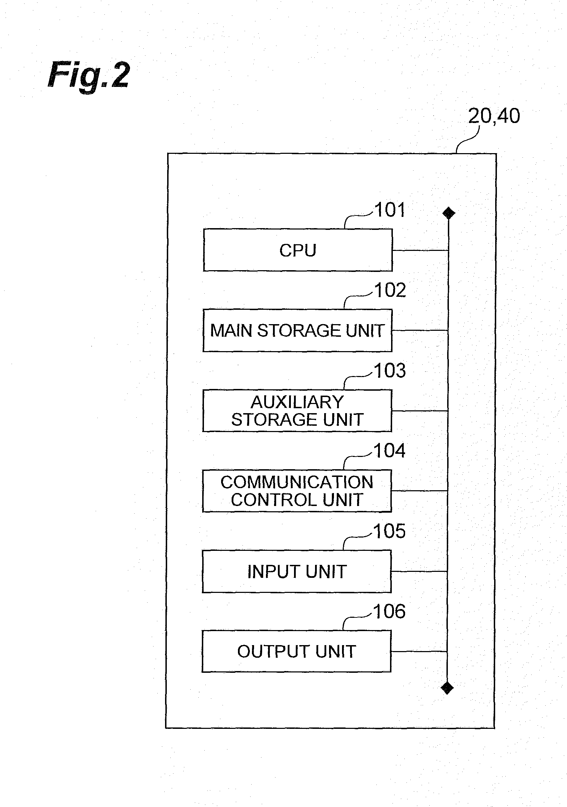

As shown in Fig. 2, the shopping server 20 includes a CPU 101 that executes an operating system, an application program and the like, a main storage unit 102 such as ROM and RAM, an auxiliary storage unit 103 such as a hard disk, a communication control unit 104 such as a network card, an input unit 105 such as a keyboard and a mouse, and an output unit 106 such as a monitor. The functional components of the shopping server 20 are implemented by loading given software onto the CPU 101 or the main storage unit 102, making the communication control unit 104, the input unit 105, the output unit 106 and the like operate under control of the CPU 101, and performing reading and writing of data in the main storage unit 102 or the auxiliary storage unit 103. The data and database required for processing are stored in the main storage unit 102 or the auxiliary storage unit 103. Note that, although the shopping server 20 is composed of one computer in Fig. 2, the functions of the shopping server 20 may be distributed among a plurality of computers.

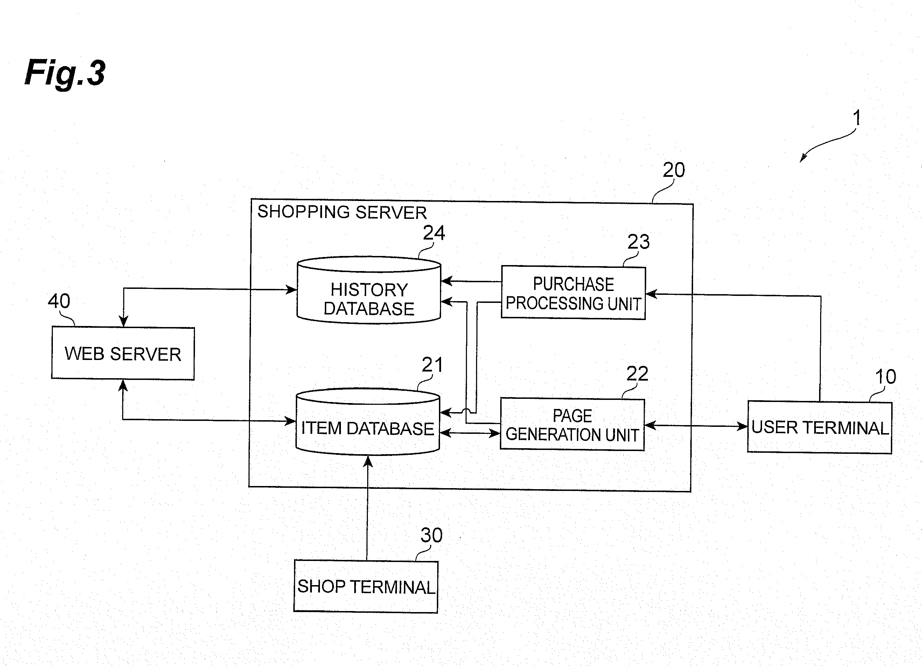

As shown in Fig. 3, in the shopping server 20, functional components called an item database 21, a page generation unit 22, a purchase processing unit 23 and a history database (first and third history databases) 24 are implemented.

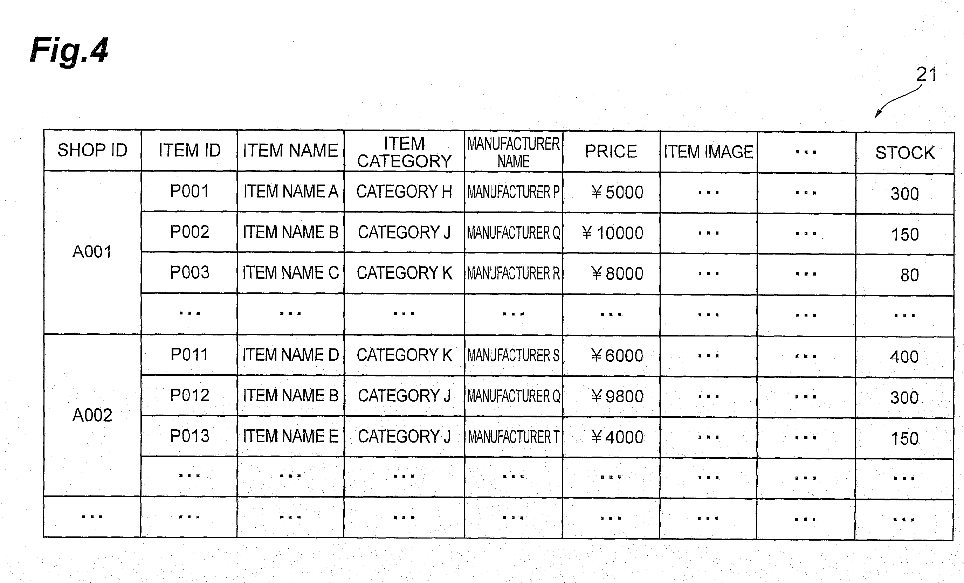

The item database 21 is a means of storing item information. The item information is registered or updated by processing in the shop terminal 30 or the purchase processing unit 23. As shown in Fig. 4, the item information is a record where a shop ID for identifying a shop, an item ID for identifying one item in one shop, and the attribute of the item are associated with one another. Although an item name, a category, a manufacturer name, a price, an item image and the quantity of stock are shown as the item attribute in the example of Fig. 4, the item attribute may be determined arbitrarily. Note that the item may be a tangible object or a non-tangible object such as offer of a service.

As for the item ID, a value common to different shops is not assigned to one item, and different values for different shops are assigned to the same item. In the example of Fig. 4, the item ID assigned to an item B is different between a shop with the shop ID "A001" and a shop with the shop ID "A002". Note that, however, one item of one shop can be uniquely identified by a combination of the shop ID and the item ID, and therefore the item ID is not necessary to vary from record to record. For example, a catalogue ID (model number) that identifies one item may be used as the item ID.

Some of the attributes of one item can be different between shops. In the example of Fig. 4, the price and the stock of the item B are different between shops.

The structure of a record of item information is not limited to the example shown in Fig. 4. The item information may be normalized or made redundant by an arbitrary policy as long as a shop and an item are associated with each other.

The page generation unit 22 is a means of, in response to the HTTP request from the user terminal 10, generating a web page of an online shopping site and transmitting the generated web page to the user terminal 10. For example, the page generation unit 22 generates and transmits a web page (item page) of an item corresponding to a link clicked on in the user terminal 10 or a web page (search result page) on which one or more items that satisfies a search condition input through the user terminal 10 are shown. Further, the page generation unit 22 generates and transmits a web page (shopping cart page) displaying a list of items added to a shopping cart or a web page (payment page) for payment and delivery processing in response to an operation on an item page in the user terminal 10. When generating a web page, the page generation unit 22 searches the item database 21 and read necessary item information according to need.

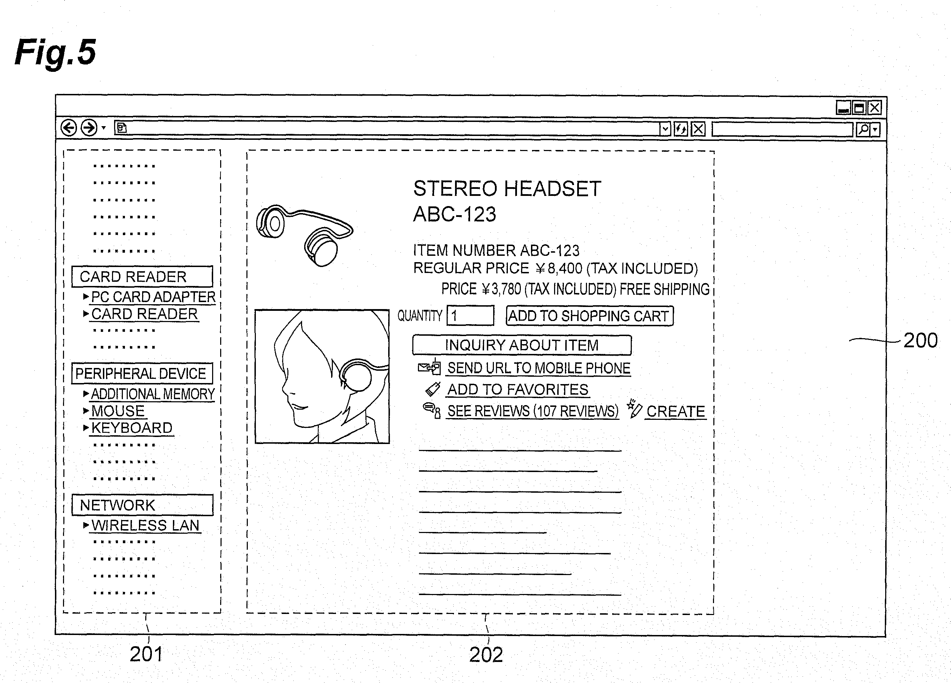

Fig. 5 shows an example of an item page generated by the page generation unit 22. The example shown in Fig. 5 is a web page 200 for the item "stereo headset" available in a specific shop. In an area 201 on the left of the web page 200, links to access other items available in the shop are shown. On the other hand, in the remaining area 202 of the item page, item information such as the price and the model number of the stereo headset, various buttons to add the item to a shopping cart or make inquiries, and various links to add the item to favorites or view or create reviews are shown.

In addition to the above-described page generation process, the page generation unit 22 creates a record of viewing history including the user ID contained in the HTTP request, the ID of the item shown on the generated and transmitted web page, and the current date and time and stores the record into the history database 24.

The purchase processing unit 23 is a means of performing a purchase process such as arrangements for an item, billing, update of the quantity of stock in the item information and the like when a purchase order for an item is made from a user through the payment page. The purchase processing unit 23 receives the order data containing the user ID and the item ID of the item to be purchased from the user terminal 10 and then executes the purchase process based on the order data. Further, the purchase processing unit 23 creates a record of purchase history including the user ID, the item ID and the current date and time and stores the record into the history database 24.

The history database 24 is a means of storing various history data (viewing history, purchase history, search history). A record of viewing history includes a user ID, the ID of a viewed item, and viewing date and time. A record of purchase history includes a user ID, the ID of a purchased item, and purchase date and time. The search history includes a user ID, a keyword that a user has entered to search for an item in a predetermined web page of a virtual shopping mall, the URL of a web page included in a search result page, and search data and time. The viewing history is stored by the page generation unit 22, and the purchase history is stored by the purchase processing unit 23. The viewing history is generated and stored each time an item search process is made.

Note that the item database 21 and the history database 24 may be placed outside the shopping server 20. In this case, the page generation unit 22 and the purchase processing unit 23 access the databases 21 and 24 through the communication network.

The shop terminal 30 is a computer that is setup in a member shop of the virtual shopping mall. The shop terminal 30 receives an instruction for registration, overwrite or deletion of item information input by a staff of a member shop and updates the item information of the shop stored in the item database 21 based on the instruction.

On the basis of the above assumption, the web server 40 to which the information providing device according to one embodiment of the invention is applied is described hereinbelow. The web server 40 is a computer that executes providing of a toolbar for displaying information (related item information) of another item (related item) related to an item displayed on an item page and searching for related item information. The web server 40 may be administered by the same company as or a different company from the shopping server 20.

The hardware configuration of the web server 40 is the same as that of the shopping server 20, and it may be as shown in Fig. 2, for example. Accordingly, the functional components of the web server 40 are implemented by loading given software onto the CPU 101 or the main storage unit 102, making the communication control unit 104, the input unit 105, the output unit 106 and the like operate under control of the CPU 101, and performing reading and writing of data in the main storage unit 102 or the auxiliary storage unit 103. The data and database required for processing are stored in the main storage unit 102 or the auxiliary storage unit 103. The functions of the web server 40 may be distributed among a plurality of computers.

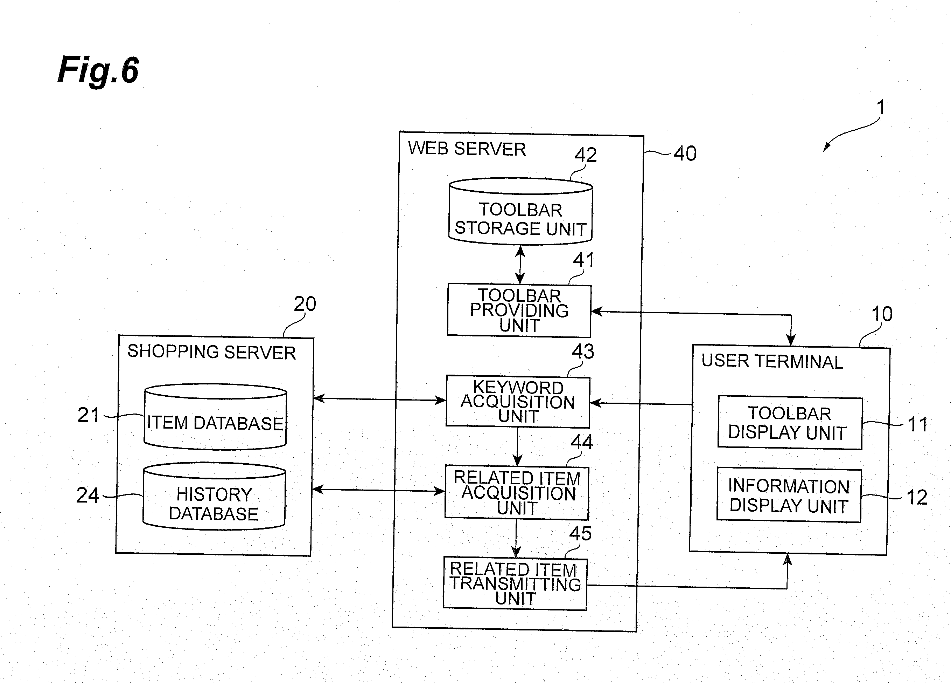

As shown in Fig. 6, in the web server 40, functional components called a toolbar providing unit 41, a toolbar storage unit 42, a keyword acquisition unit (first item acquisition unit) 43, a related item acquisition unit (second item acquisition unit) 44, and a related item transmitting unit (item information transmitting unit) 45 are implemented.

The toolbar providing unit 41 is a means of providing the user terminal 10 with a toolbar program (information display program) that is displayed superimposed on an item page generated by the page generation unit 22 of the shopping server 20. The toolbar is a user interface for displaying related item information. The toolbar providing unit 41 receives a request for downloading from the user terminal 10 and then reads the toolbar program from the toolbar storage unit 42 and transmits it to the user terminal 10. The transmitted program is received by the user terminal 10 and installed therein. After the toolbar is installed in the user terminal 10, a user can view the related item information using the toolbar. A user ID is stored in the installed toolbar.

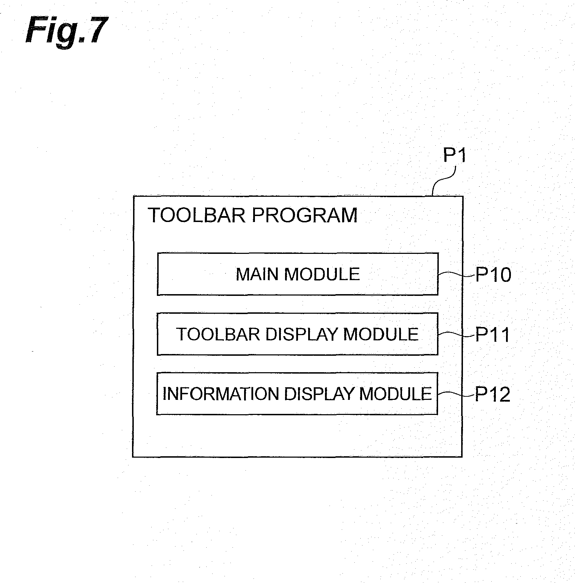

As shown in Fig. 7, a toolbar program P1 includes a main module P10, a toolbar display module P11, and an information display module P12.

The main module P10 is a part that exercises control over the toolbar functions. The toolbar display module P11 causes the user terminal 10 to implement a toolbar display unit 11 that displays a toolbar superimposed on a web page. The information display module P12 causes the user terminal 10 to implement an information display unit 12 that receives related item information transmitted from the related item transmitting unit 45 and displays the related item information in a toolbar. Specifically, when the toolbar program P1 is installed, the toolbar display unit 11 (window display unit) and the information display unit 12 are implemented in the user terminal 10 as shown in Fig. 6.

The toolbar program P1 may be provided through the communication network N as in this embodiment or provided in the form of being recorded in a static manner on a recording medium such as CD-ROM, DVD-ROM or semiconductor memory, for example.

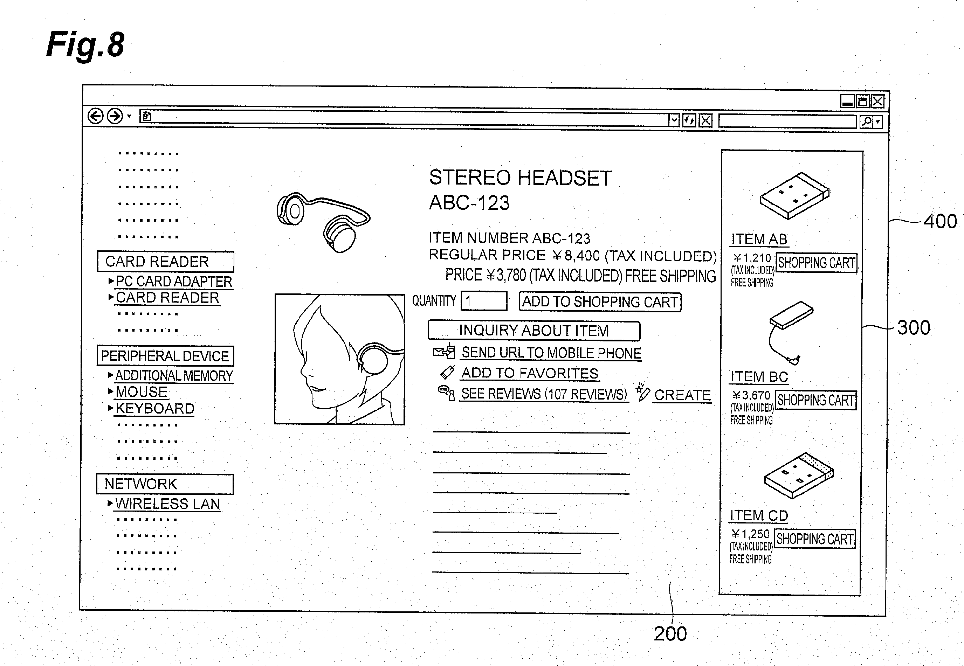

As shown in Fig. 8, a toolbar 300 is displayed as a separate window from a web browser 400. The toolbar 300 is displayed superimposed on a web page 200, and therefore the toolbar 300 appears as a pop-up window in the web browser 400 for a user.

In the toolbar 300, item information about one or more related items are shown. In the name of each related item ("item AB", "item BC" and "item CD" in the example of Fig. 8), a link to a web page of the related item is embedded. When the link is clicked, an HTTP request for acquiring the web page of the related item (related item page) is transmitted to the shopping server 20. In response to the request, the page generation unit 22 generates a related item page and transmits it to the user terminal 10, and then the web page 200 that is displayed on the web browser 400 is changed to the related item page. A user can thereby easily access the web page of the related item. Further, because a shopping cart button (a user interface for selecting a related item as an item to be purchased) for each related item is shown in the toolbar 300, a user can easily select the related item as an item to be purchased.

The toolbar may be activated upon a predetermined user operation on the item page (for example, right click in the item page) or may be activated at the same time as the web browser. The toolbar may be not visible at the time of startup.

The toolbar has the function of displaying related items. When a predetermined user operation on the item page (for example, right click in the item page) is performed, or when the item page is displayed, the toolbar acquires the URL (Uniform Resource Locator) of the item page that is displayed on the web browser and transmits the URL and the stored user ID to the web server 40. Then, the toolbar receives related item information transmitted from the web server 40 in response to the above information and displays the related item information as shown in Fig. 8. In the case where the toolbar acquires related item information at the same time as displaying the item page, the toolbar may show the related item information only after receiving a predetermined user operation (for example, right click in the item page).

The position to place the toolbar on the web browser can be set arbitrarily, and the toolbar may be designed so that a user can change the position, shape and size of the toolbar. Further, the way related items are shown in the toolbar is not limited to the example of Fig. 8. For example, it is not necessary to place the links to the web pages of related items and the shopping cart buttons in the toolbar. Further, interfaces different from the links to the web pages of related items and the shopping cart buttons may be placed in the toolbar. For example, an inquiry button as shown in Fig. 5, a text box and a button for creating a comment and registering it into a predetermined database and the like may be placed.

The keyword acquisition unit 43 is a means of acquiring information about an item to be shown on a web page that is generated based on the HTTP request from the user terminal 10.

When the keyword acquisition unit 43 receives a user ID and an URL of an item page transmitted from the toolbar, it first determines whether the URL represents a web page on which related item information is to be superimposed. Only when the received URL is the one to be processed, the keyword acquisition unit 43 starts acquisition of item information shown on the item page.

For example, the keyword acquisition unit 43 may store a list of URLs on which related item information is to be superimposed and, only when the received URL is included in the list, start acquisition of item information.

Further, the keyword acquisition unit 43 may analyze the contents and structure of the item page represented by the received URL and, only when a predetermined user interface or a word is included in the item page, start acquisition of item information. For example, the keyword acquisition unit 43 may start acquisition of item information when a shopping cart button, a payment button and the like are included or terms and conditions of transaction, delivery method, price and the like are described in the item page represented by the URL.

In this manner, by determining whether or not to acquire item information in advance, it is possible to prevent search for a related item from being made on a web page on which the item is not shown. Although such determination logic may be implemented in the toolbar, a processing load on the user terminal 10 in which the toolbar is installed can be reduced by making this determination in the web server 40 as in this embodiment. If a list of URLs is used for this determination process, determination as to whether the web page is related to the item can be made easily. On the other hand, if determination as to whether the web page is related to the item is made based on the presence or absence of a predetermined interface or a predetermined word, determination about the web page can be made dynamically.

When it is determined to acquire item information, the keyword acquisition unit 43 transmits an HTTP request containing the received URL to the shopping server 20 and receives an item page that is generated and transmitted by the page generation unit 22 in response to the request. Specifically, the keyword acquisition unit 43 acquires data of the same item page as the one displayed on the user terminal 10. Then, the keyword acquisition unit 43 acquires a shop ID (first shop information that identifies a shop where a first item is available) and a keyword from the item page and outputs those data and the user ID to the related item acquisition unit 44. In this embodiment, the shop ID and the keyword correspond to first item information.

The keyword may be acquired using various methods. As a first method, the keyword acquisition unit 43 may acquire a word obtained by performing morphological analysis on text in the item page as a keyword or acquire a word indicated by tag information in the item page as a keyword. Further, the keyword acquisition unit 43 may acquire a word obtained by performing optical character recognition (OCR) of an image in the item page as a keyword.

Further, the keyword acquisition unit 43 may finally acquire a keyword selected from keywords acquired using the above first method by the following method. This method is described hereinafter as second and third methods.

As a second method, the keyword acquisition unit 43 may specify a group of words frequently searched for (for example, top ten searched words) by referring to the search history in the history database 24 and finally select a word included in the group among the keywords obtained using the first method. In this manner, by using a word frequently used in the item search service as a keyword, it is possible to acquire related item information using an appropriate keyword.

As a third method, the keyword acquisition unit 43 may extract a search history corresponding to an input user ID and URL from the history database 24 and finally select a word included in the group among the keywords obtained using the first method. A user can thereby obtain a keyword following a trend of search by a user.

The related item acquisition unit 44 is a means of acquiring related item information (second item information) by searching the item database 21 based on at least some of an input shop ID, keyword and user ID. There are several methods of searching for related item information.

As a first method, the related item acquisition unit 44 may extract one or more item information having a shop ID that matches with the input shop ID and an item attribute (an item name, a category, a manufacturer name etc.) that matches with or similar to the input keyword from the item database 21. In this case, a user ID is not required. In the case where there are a plurality of keywords, the related item acquisition unit 44 may perform AND search or OR search.

As a second method, the related item acquisition unit 44 may extract a related item by referring to at least one of a viewing history and a purchase history of a user. Note that at least one of a viewing history and a purchase history is referred to hereinafter as "viewing/purchase history". Specifically, the related item acquisition unit 44 first reads the viewing/purchase history corresponding to the user ID from the history database 24 and thereby specifies items (accessed items) which a user has viewed or purchased in the past. Then, the related item acquisition unit 44 extracts one or more item information having a shop ID that matches with the input shop ID and an item attribute that matches with or similar to the both of the input keyword and the attributes of specified items from the item database 21. In this manner, by acquiring related item information in consideration also of the items which a user who has accessed the web page has viewed or purchased in the past, it is possible to present a related item that matches the user's preference.

In any case, the related item acquisition unit 44 acquires information of a related item that is available in the same shop as the item shown on the item page and outputs it to the related item transmitting unit 45. In the case of performing search on the basis of the similarity of words, the related item acquisition unit 44 can use the known recommended item extraction logic, semantic analysis or the like. Further, the related item acquisition unit 44 may use API (Application Programming Interface) for search provided by the shopping server.

The related item transmitting unit 45 is a means of transmitting the related item information input from the related item acquisition unit 44 to the user terminal 10 so that the related item information is shown in the toolbar.

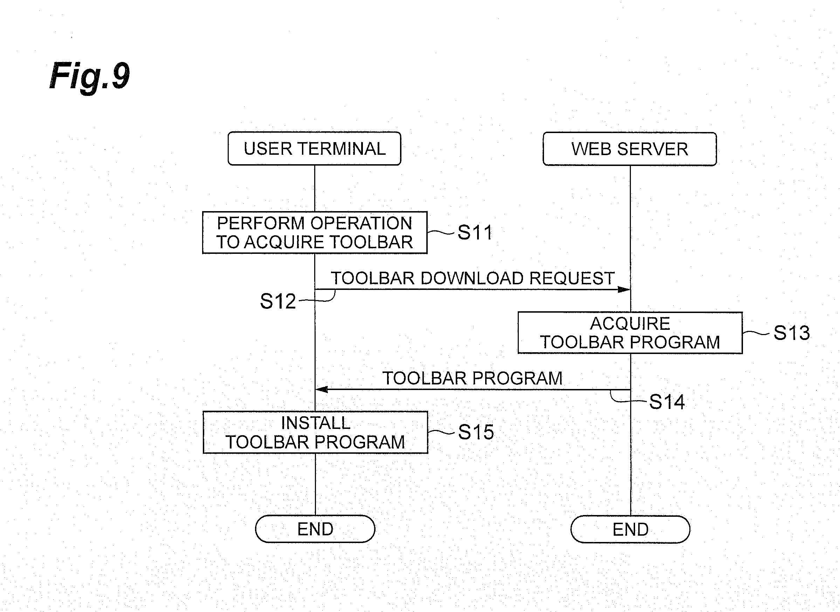

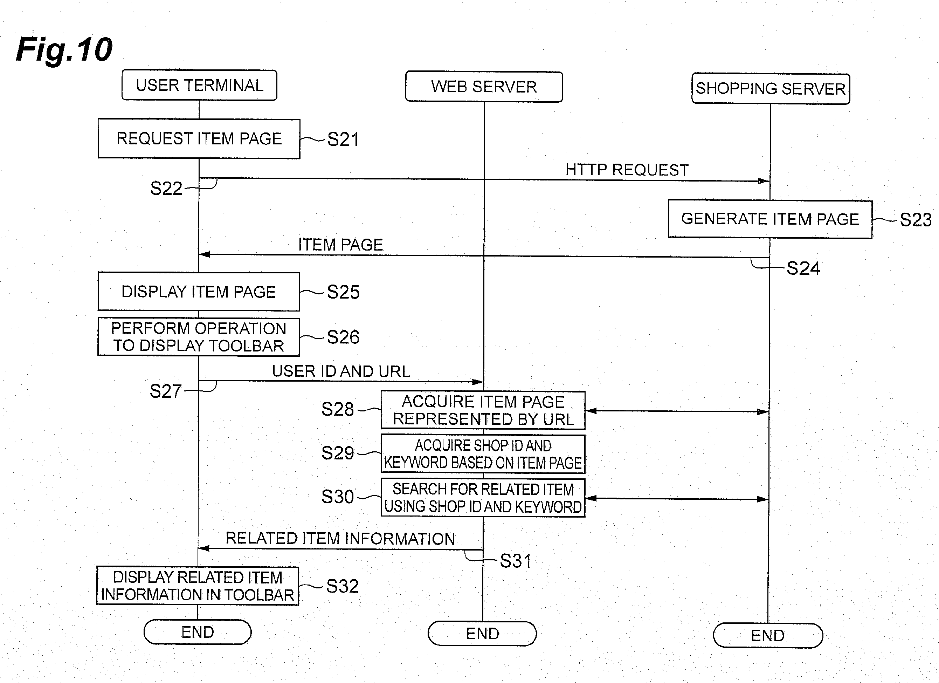

The operation of the online shopping system 1 is described and an information providing method according to this embodiment is described with reference to Figs. 9 and 10.

Installation of the toolbar into the user terminal 10 is performed as shown in Fig. 9. When a user performs an operation to acquire the toolbar in the user terminal 10 (Step S11), the user terminal 10 transmits a toolbar download request to the web server 40 in response to the operation (Step S12). In the web server 40, the toolbar providing unit 41 acquires a toolbar program from the toolbar storage unit 42 in response to the request and transmits the program to the user terminal 10 (Steps S 13, S 14). The user terminal 10 receives the program and performs installation (Step S 15). The toolbar is thereby enabled in the user terminal 10.

Showing of related item information using the toolbar is performed as shown in Fig. 10. When a user performs an operation to request a specific item page in the user terminal 10 (Step S21), the user terminal 10 transmits an HTTP request for acquiring the item page to the shopping server 20 in response to the operation (Step S22). In the shopping server 20, the page generation unit 22 generates an item page in response to the HTTP request and transmits the page to the user terminal 10 (Steps S23, S24). The item page is thereby displayed on the web browser of the user terminal 10 (Step S25).

After that, when a user performs an operation to show related items on the web browser on which the item page is displayed (for example, right click in the item page) (Step S26), the toolbar transmits the prestored user ID and the URL of the item page to the web server 40 (Step S27). As described earlier, the toolbar may transmit the user ID and the URL to the web server 40 automatically at the time when the item page is displayed without waiting for the user operation. Thus, the processing of Step S26 can be skipped.

In the web server 40, the keyword acquisition unit 43 acquires the item page represented by the URL from the shopping server 20 (Step S28, first item acquisition step) and acquires a shop ID and a keyword based on the item page (Step S29, first item acquisition step). In this step, the keyword acquisition unit 43 determines whether or not to acquire a keyword. There are various methods for acquiring a keyword as described earlier. Then, the related item acquisition unit 44 searches the item database 21 in the shopping server 20 using the shop ID and the keyword and thereby acquires item information corresponding to those data as related item information (Step S30, second item acquisition step). There are various methods for searching for related item information also as described earlier. After that, the related item transmitting unit 45 transmits the related item information to the user terminal 10 (Step S31, item information transmitting step).

In the user terminal 10, the toolbar shows the related item information (Step S32). The user can thereby view the item shown in the item page and the related items shown in the toolbar at the same time. Note that, in the case of acquiring related item information at the same time as displaying the item page and showing the related item information only after receiving a predetermined user operation (for example, right click in the item page), the processing of Step S32 is performed in response to the user operation.

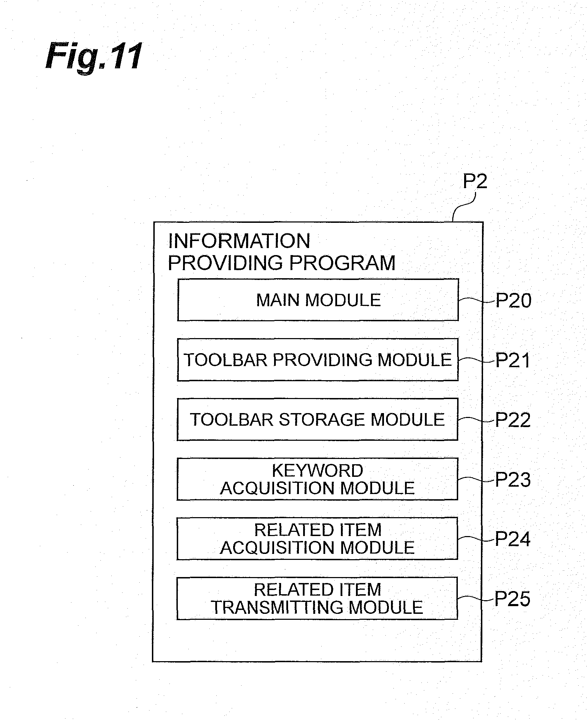

Hereinafter, an information providing program P2 that causes a computer to function as the web server 40 is described with reference to Fig. 11.

The information providing program P2 includes a main module P20, a toolbar providing module P21, a toolbar storage module P22, a keyword acquisition module P23, a related item acquisition module P24, and a related item transmitting module P25.

The main module P20 is a part that exercises control over the information providing functions. The functions implemented by executing the toolbar providing module P21, the toolbar storage module P22, the keyword acquisition module P23, the related item acquisition module P24 and the related item transmitting module P25 are equal to the functions of the toolbar providing unit 41, the toolbar storage unit 42, the keyword acquisition unit 43, the related item acquisition unit 44 and the related item transmitting unit 45 described above, respectively.

The information providing program P2 is provided in the form of being recorded in a static manner on a recording medium such as CD-ROM, DVD-ROM or semiconductor memory, for example. Further, the information providing program P2 may be provided as a data signal superimposed onto a carrier wave through a communication network.

As described above, according to this embodiment, while information of an item obtained based on a request from a user is shown on the web page, related items are shown in the toolbar that is displayed superimposed on the web page. In this manner, by displaying related items not in the web page but in the toolbar, a user can view the item which the user has accessed on purpose (the item which the user has searched for) and the related items at the same time without performing any particular operation on the web page. It is thereby possible to enhance convenience in viewing the related items.

For example, there is a case where, even when a related item is shown on the web page, a user cannot view an item which the user has accessed and the related item at the same time due to the page layout, and such inconvenience can be eliminated in this embodiment. Further, even when related items are not shown on the web page, a user can obtain information about the related items through the toolbar. Further, because related items are shown in the toolbar, display of related items does not cause a change in display in the web browser against the user's intention.

As described above, a method of displaying related items in this embodiment is totally different from a method of displaying related items in a web page and a method of displaying a list of information obtained by keyword search using a search engine according to related art.

Further, a user can easily obtain related item information without any operation, or by performing a simple operation such as right click on a web page. A user can thereby obtain related item information quickly and easily compared with the case of obtaining related item information by entering a keyword which the user has thought up and making a search, for example.

Because related items that are available in the same shop are shown to a user in this embodiment, it is possible for the shop to prevent the user's attention from shifting to an item in another shop. Further, it is possible for a user to access a related item that is available in the same shop and complete a purchase in one shop. Such a method is totally different from a method of displaying related items regardless of shops where the items are available according to related art.

### (Second embodiment)

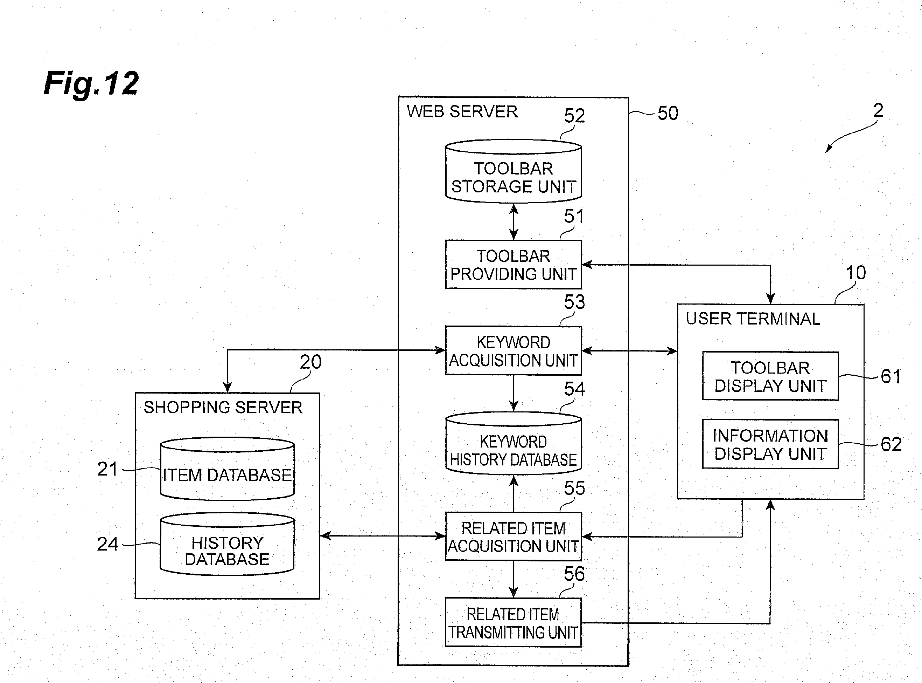

A second embodiment is described hereinafter with reference to Figs. 12 to 19. The second embodiment is different from the first embodiment in that related items are searched not automatically using a keyword determined in the web server but using a keyword specified by a user among keywords presented to the user. Accordingly, in the second embodiment, some of the functions of the toolbar and the web server are different from those in the first embodiment. Different points from the first embodiment are particularly described hereinbelow.

Although the overall configuration of an online shopping system 2 according to the second embodiment is the same as that of the first embodiment (see Fig. 1), the online shopping system 2 includes a web server 50 in place of the web server 40. An information providing device according to another embodiment of the invention is applied to the web server 50.

The web server 50 is a computer that executes providing of a toolbar for displaying related item information and searching for related item information. The web server 50 is connected with the user terminal 10 and the shopping server 20 to be able to communicate with them through the communication network N. The hardware configuration of the web server 50 is the same as that of the web server 40 (see Fig. 2). Accordingly, the functional components of the web server 50 are also implemented by loading given software onto the CPU 101 or the main storage unit 102, making the communication control unit 104, the input unit 105, the output unit 106 and the like operate under control of the CPU 101, and performing reading and writing of data in the main storage unit 102 or the auxiliary storage unit 103. The data and database required for processing are stored in the main storage unit 102 or the auxiliary storage unit 103. The functions of the web server 50 may be distributed among a plurality of computers.

As shown in Fig. 12, in the web server 50, functional components called a toolbar providing unit 51, a toolbar storage unit 52, a keyword acquisition unit (first item acquisition unit and presentation unit) 53, a keyword history database (second history database) 54, a related item acquisition unit (second item acquisition unit) 55, and a related item transmitting unit (item information transmitting unit) 56 are implemented.

A method of providing the toolbar program to the user terminal 10 in this embodiment is the same as that of the first embodiment, and therefore the functions of the toolbar providing unit 51 and the toolbar storage unit 52 are the same as the functions of the toolbar providing unit 41 and the toolbar storage unit 42, respectively, according to the first embodiment. However, the functions of the toolbar are different from those of the first embodiment and thus the functions are described firstly hereinbelow.

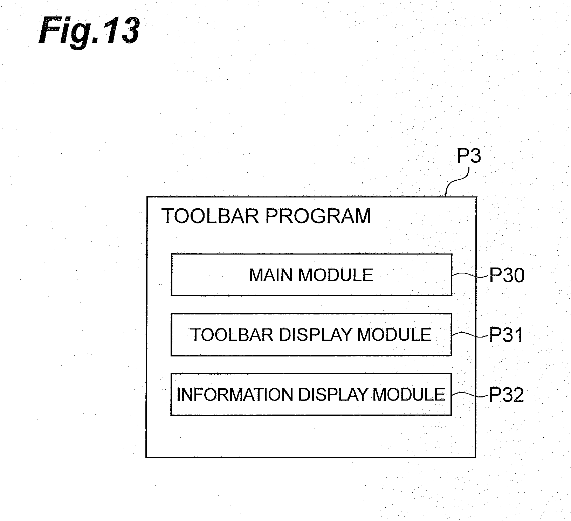

As shown in Fig. 13, a toolbar program (information providing program) P3 includes a main module P30, a toolbar display module P31, and an information display module P32.

The main module P30 is a part that exercises control over the toolbar processing. The toolbar display module P31 causes the user terminal 10 to implement a toolbar display unit 61 that displays a toolbar. The information display module P32 causes the user terminal 10 to implement an information display unit 62 that receives and displays presented words, which are described later, and receives and displays related item information. Specifically, when the toolbar program P3 is installed, the toolbar display unit (window display unit) 61 and the information display unit 62 are implemented in the user terminal 10 as shown in Fig. 12.

The toolbar program P3 may be provided through the communication network N or a recording medium, just like the toolbar program P1.

The toolbar according to this embodiment is a user interface that has not only the function of displaying related items but also the function of allowing a user to specify a keyword for searching for related items. After the toolbar is installed in the user terminal 10, a user can view related item information by designating a keyword using the toolbar. A user ID is stored in the installed toolbar. In this embodiment also, the toolbar is displayed superimposed on a web page, and therefore the toolbar appears as a pop-up window in the web browser for a user.

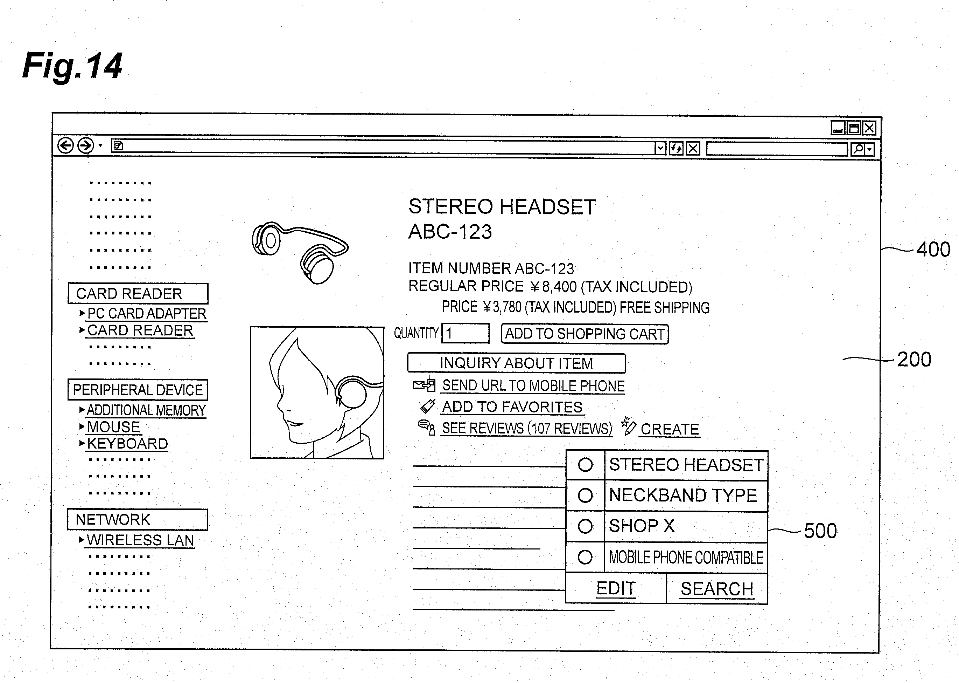

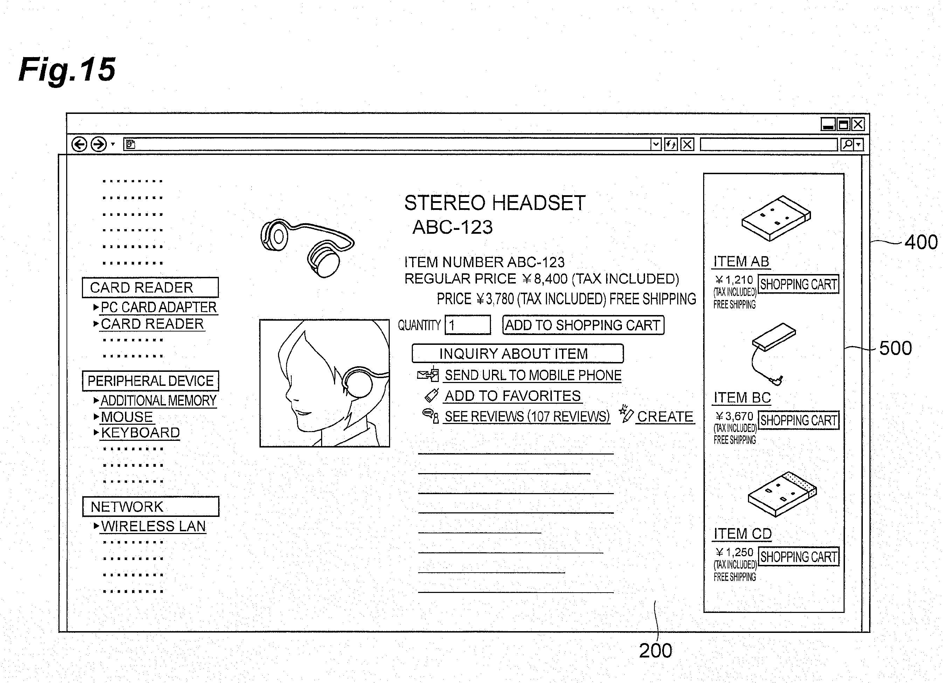

The operation of a toolbar 500 according to this embodiment is described with reference to Figs. 14 and 15. The toolbar 500 may be activated upon a predetermined user operation on an item page 200 (for example, right click in the item page) or may be activated at the same time as a web browser 400. The toolbar 500 may be not visible at the time of startup.

When the item page 200 is displayed on the user terminal 10, and the toolbar 500 is displayed superimposed on the item page automatically or in response to a user operation, a list of presented words as shown in Fig. 14 is shown in the toolbar 500. In the example of Fig. 14, four presented words: "stereo headset," "neckband type," "shop X" and "mobile phone compatible" are shown.

On the left of each presented word, a mark indicating whether or not to use the presented word when searching for related items is shown. The mark is either "o" indicating use of the presented word and "x" indicating nonuse of the presented word. By clicking the mark, a user can specify whether or not to use the corresponding presented word for related item search. The edit button at the lower left of the toolbar 500 is a button for editing the presented word. The edit button enables a user to set a keyword freely using the presented words as references. The search button at the lower right of the toolbar 500 is a button for giving an instruction to make related item search to the web server 50.

When the search button is pressed and thereby the related item search is performed, item information about one or more related items are shown in the toolbar 500 as shown in Fig. 15. The shape and size of the toolbar can vary as shown in Figs. 14 and 15. In the name of each related item ("item AB", "item BC" and "item CD" in the example of Fig. 15), a link to a web page of the related item is embedded. Further, a shopping cart button for each related item is shown. In this manner, the way related items are shown is the same as that in the first embodiment (Fig. 8).

When a predetermined user operation on the item page (for example, right click in the item page) is performed, or when the item page is displayed, the toolbar acquires the URL of the item page that is displayed on the web browser and transmits the URL and the stored user ID to the web server 50. Then, the toolbar receives one or more presented words transmitted from the web server 50 in response to the above information and displays the presented words as shown in Fig. 14. Note that, in the case where the presented words are acquired upon display of the item page, the toolbar may show the presented words only after receiving a predetermined user operation (for example, right click in the item page). This avoids a time lag from the user operation to showing of related items.

After that, when a user specifies a keyword based on the presented words and presses the search button, the toolbar transmits the URL of the item page, the user ID and the selected one or more keywords to the web server 50. Specifying a keyword based on the presented words means selecting a presented word or selecting a word created by editing a presented word. The toolbar receives related item information that is transmitted from the web server 50 in response to the transmission and shows the related item information as shown in Fig. 15. A method of operation of the toolbar after the related item information is shown is the same as in the first embodiment.

The way the toolbar is placed or displayed and the way related items are shown in the toolbar can be set arbitrarily as in the first embodiment. The presented words may be grouped and displayed in a hierarchical fashion. Further, some of the presented words may be displayed with emphasis using optional visual effects (for example, color-coding, highlight etc.). For example, a presented word that is determined to be particularly frequently searched for by another user may be displayed with emphasis in the keyword acquisition unit 53, which is described later.

The keyword acquisition unit 53 is a means of acquiring information about an item to be shown on a web page that is generated based on the HTTP request from the user terminal 10.

When the keyword acquisition unit 53 receives a user ID and an URL of an item page transmitted from the toolbar, it first determines whether the URL represents a web page on which related item information is to be superimposed. The keyword acquisition unit 53 can make this determination in the same manner as the keyword acquisition unit 43 according to the first embodiment.

Only when the received URL is the one to be processed, the keyword acquisition unit 53 starts acquisition of item information (first item information) shown on the item page. The keyword acquisition unit 53 transmits an HTTP request containing the received URL to the shopping server 20 and receives an item page that is generated and transmitted by the page generation unit 22 in response to the request. Then, the keyword acquisition unit 53 acquires a shop ID (first shop information that identifies a shop where a first item is available) and presented words from the item page.

As for the acquisition of presented words, the keyword acquisition unit 53 may acquire the presented words by the same methods (the first to third methods) as the keyword acquisition unit 43 according to the first embodiment.

Further, as a fourth method, in the case where a user has viewed the same item page in the past, the keyword acquisition unit 53 may acquire presented words to be used this time from the keyword history. Specifically, the keyword acquisition unit 53 determines whether the recent keyword history corresponding to the received user ID and URL (the URL of the web page acquired this time) is stored in the keyword history database 54, which is described later. When such a keyword history is stored, the keyword acquisition unit 53 acquires the keywords shown in the keyword history as the presented words. At this time, the keyword acquisition unit 53 may acquire only the keywords with flag information "YES", which are the keywords that have been actually used by a user last time. On the other hand, when the keyword history corresponding to the received user ID and URL is not stored, the keyword acquisition unit 53 can use any of the first to third methods described above. In the fourth method, the keyword history database 54 functions as a cache.

According to the fourth method described above, it is possible to acquire the presented words easily and promptly. In the case of acquiring the keywords with flag information "YES" only, candidate words that are in line with the user's intention can be presented.

As a fifth method, the keyword acquisition unit 53 may acquire presented words to be used this time from the keyword history of another user. Specifically, the keyword acquisition unit 53 reads the keyword history including a user ID that is different from the received user ID and having an URL that matches with the input URL (the URL of the web page acquired this time) from the keyword history database 54. Then, the keyword acquisition unit 53 acquires a predetermined number of keywords from the keywords shown in the read keyword history as the presented words. At this time, the keyword acquisition unit 53 can select the presented words using an arbitrary method. For example, the keyword acquisition unit 53 may extract only the keywords with flag information "YES" and select a predetermined number of keywords in descending order of the number of times the keyword is specified by another user. Further, the keyword acquisition unit 53 may summarize the keyword history without reference to the flag information and select a predetermined number of keywords in descending order of the number of times the keyword is presented.

As described above, by setting the same words as those used in the processing for another user as the presented words, it is possible to provide the presented words that reflect a trend of keyword setting by another person to a user.

After acquiring the shop ID and the presented words, the keyword acquisition unit 53 transmits those data to the user terminal 10. Further, the keyword acquisition unit 53 generates a keyword history based on those data and the received user ID and URL and stores it into the keyword history database 54.

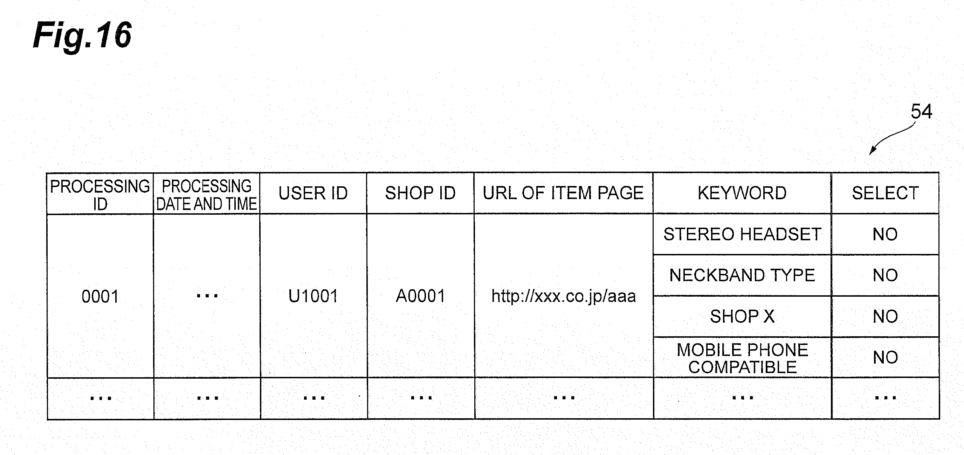

As shown in Fig. 16, a record of keyword history (history information) contains a processing ID that identifies one keyword acquisition processing, the date and time of the processing, a received user ID (user information), a shop ID acquired from the item page, a received URL (the URL of the item page), one or more acquired keywords (presented words), and flag information indicating whether each keyword (presented word) is selected by a user or not. The flag information is either "YES" or "NO", and because any keyword is not yet specified by a user immediately after the keyword acquisition is performed, the initial value of the flag information is "NO".

The related item acquisition unit 55 is a means of receiving the shop ID, keyword and user ID transmitted from the user terminal 10 and acquiring related item information (second item information) by searching the item database 21 based on at least some of those data. The related item acquisition unit 55 performs search for related items that are available in the same shop as the item shown on the item page using an arbitrary method in the same manner as the related item acquisition unit 44 according to the first embodiment.

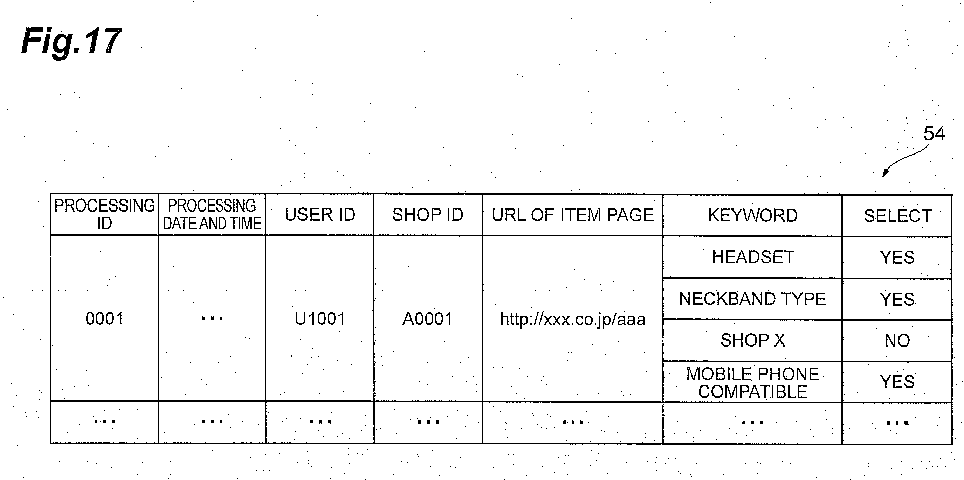

The related item acquisition unit 44 acquires information of related items that are available in the same shop as those shown on the item page and outputs the related item information to the related item transmitting unit 45. Further, the related item acquisition unit 44 registers information indicating that a user has used a specific keyword into the keyword history database 54. Specifically, the related item acquisition unit 44 updates the flag information corresponding to the specified keyword to "YES" in the keyword history with the corresponding processing ID. In the case where a user has edited the presented word, the related item acquisition unit 44 updates the keyword (presented word) in the keyword history to the edited value. For example, the keyword history shown in Fig. 16 is updated as shown in Fig. 17. The example of Fig. 17 shows that a user has edited the original keyword "stereo headset" to "headset" and that the user has selected three keywords "headset", "neckband type" and "mobile phone compatible".

The related item transmitting unit 56 is a means of transmitting the related item information input from the related item acquisition unit 55 to the user terminal 10 so that the related item information is shown in the toolbar.

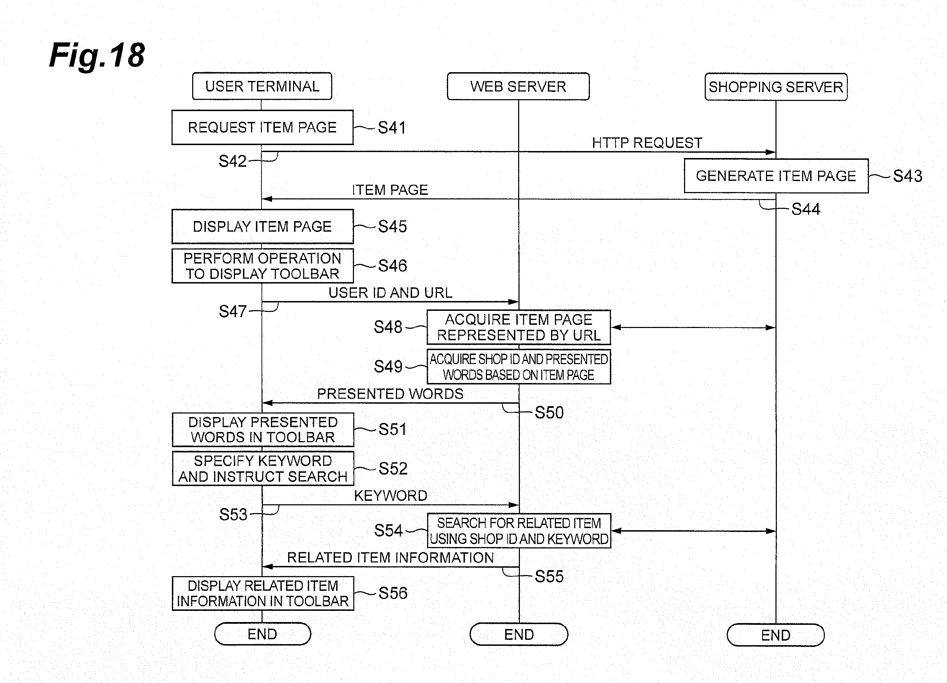

The operation of the online shopping system 2 is described and an information providing method according to this embodiment is described with reference to Fig. 18. The related item display process which is different from the first embodiment is described hereinbelow.

The processing of Steps S41 to S45 is the same as the processing of Steps S21 to S25 according to the first embodiment and thus not redundantly described. When a user performs an operation to display related items on the item page (for example, right click in the item page) (Step S46), the toolbar transmits the prestored user ID and URL of the item page to the web server 50 (Step S47). As described earlier, the toolbar may transmit the user ID and the URL to the web server 50 automatically at the time when the item page is displayed without waiting for the user operation. Thus, the processing of Step S46 can be skipped.

In the web server 50, the keyword acquisition unit 53 acquires the item page represented by the URL from the shopping server 20 (Step S48, first item acquisition step) and acquires a shop ID and presented words based on the item page (Step S49, first item acquisition step). There are various ways of acquiring the presented words as described above. The keyword acquisition unit 53 transmits the acquired presented words to the user terminal 10 (Step S50, first item acquisition step).

In the user terminal 10, the toolbar displays the presented words (Step S51). Then, when a user specifies a keyword and presses the search button in the toolbar (Step S52), the toolbar transmits the keyword to the web server 50 (Step S53).

In the web server 50, the related item acquisition unit 55 searches the item database 21 using the shop ID and the keyword and thereby acquires item information corresponding to those data as related item information (Step S54, second item acquisition step). Then, the related item transmitting unit 56 transmits the related item information to the user terminal 10 (Step S55, item information transmitting step). In the user terminal 10, the toolbar displays the related item information (Step S56). Note that, in the case of acquiring presented words at the same time as displaying the item page and showing the presented words only after receiving a predetermined user operation (for example, right click in the item page), the processing of Step S51 is performed in response to the user operation.

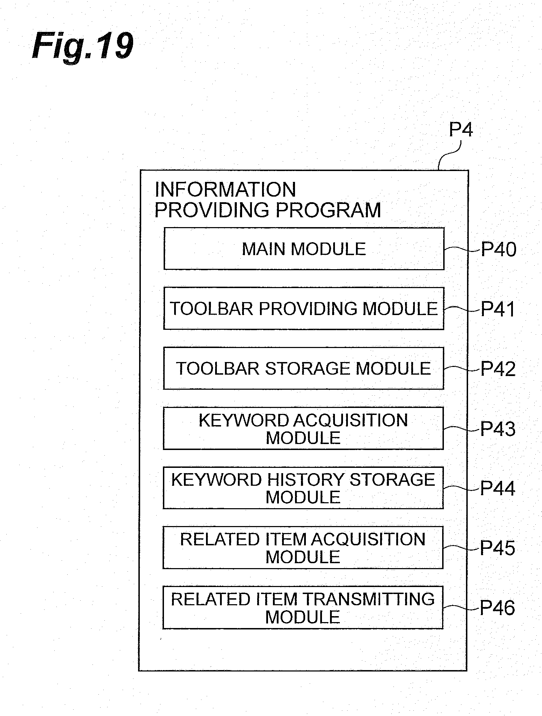

Hereinafter, an information providing program P4 that causes a computer to function as the web server 50 is described with reference to Fig. 19.

The information providing program P4 includes a main module P40, a toolbar providing module P41, a toolbar storage module P42, a keyword acquisition module P43, a keyword history storage module P44, a related item acquisition module P45, and a related item transmitting module P46.

The main module P40 is a part that exercises control over the information providing functions. The functions implemented by executing the toolbar providing module P41, the toolbar storage module P42, the keyword acquisition module P43, the keyword history storage module P44, the related item acquisition module P45 and the related item transmitting module P46 are equal to the functions of the toolbar providing unit 51, the toolbar storage unit 52, the keyword acquisition unit 53, the keyword history database 54, the related item acquisition unit 55 and the related item transmitting unit 56 described above, respectively.

The information providing program P4 may be provided through the communication network or a recording medium, just like the information providing program P2.

In the above-described second embodiment also, the same effects as in the first embodiment can be obtained. Further, the effects specific to the second embodiments are as follows.

According to this embodiment, presented words for acquiring related item information are transmitted to the user terminal 10, and therefore a user can specify words to be used for obtaining related items based on the presented words. The user can thereby easily obtain information about related items that are in line with the user's intention from the choices. Even when it is difficult to prepare a keyword for related items by oneself, for example, a user can select a keyword from the choices. Further, a user can find a keyword that is otherwise not thought up by oneself.

Further, because not only the related item information but also the presented words are shown in the toolbar, display of the web page is not affected by display of the presented words, which does not degrade the viewability of the web page.

Hereinbefore, the present invention has been described in detail with respect to the embodiment thereof. However, the present invention is not limited to the above-described embodiment. Various changes and modifications may be made therein without departing from the scope of the invention.

The web server may be integrated with the shopping server. On the other hand, the toolbar providing unit and the toolbar storage unit may be placed in a different server from the web server. In the above-described second embodiment, the keyword history database may be placed outside the web server and, in this case, the web server may access the database through the communication network.

Although an item shown on the web page and a related item are available in the same shop in each of the above embodiments, an item that is available in a different shop from the shop where an item shown on the web page is available may be extracted as a related item. In this case, the related item acquisition unit does not need to use a shop ID when extracting related item information from the item database.

Although the keyword acquisition unit determines whether the URL received from the user terminal represents the web page on which related item information is to be superimposed or not in each of the above embodiments, the determination may be skipped.

Each of the above embodiments is applicable not only to the case where only one item is shown on the web page but also to the case where a plurality of items are shown. For example, in the case where an item Qa and an item Qb are shown on the web page, the web server 40 according to the first embodiment may acquire the item information of each of the items Qa and Qb based on the URL of the web page and acquire related item information for each of the item information. On the other hand, the web server 50 according to the second embodiment may acquire presented words for each of the items Qa and Qb based on the URL of the web page and then acquire related item information (item information related to at least one of the items Qa and Qb) using a keyword (a keyword related to at least one of the items Qa and Qb) received from the user terminal 10.

Although the keyword acquisition unit 43, 53 acquires a shop ID from the item page and the related item acquisition unit 44, 45 searches for related items using the shop ID in each of the above embodiments, information different from a shop ID may be used for identifying a shop. For example, the keyword acquisition unit may acquire a shop name by analyzing a character string or an image in the item page, and the related item acquisition unit may search for related items corresponding to the shop name. Alternatively, the keyword acquisition unit may acquire shop identification information represented by the URL of the item page, and the related item acquisition unit may search for related items corresponding to the identification information. In this manner, the type of a value to be used as the shop information and the way the shop information is acquired can be set arbitrarily..

Although the toolbar stores a user ID in each of the above embodiments, a user who uses the toolbar may be identified using other information such as a browser ID or an HTTP cookie. This means that information used for verifying the identity of a user is not limited to the user ID. Further, although the history data is stored in the history database 24 in each of the above embodiments, the history may be managed using an HTTP cookie by recording at least a part of the history data in the HTTP cookie. For example, the viewing history and the search history for the past several generations may be recorded in the HTTP cookie.

As described in each of the above embodiments, a method of acquiring a keyword is not limited to one, and a method of acquiring shop information and a method of identifying a user are also not limited to one as described above. Therefore, information for searching for related items can be obtained in accordance with whether administrators are the same or different between the web server 40 and the shopping server 20 or the relationship between the toolbar and the site of the web page displayed at the back of the toolbar. For example, a shop ID may be used when administrators of the toolbar and the item page are the same, and a shop name obtained by page analysis may be used when the administrators are different.

### Reference Signs List

1 and 2...online shopping system, 10...user terminal, 11 and 61...toolbar display unit, 12 and 62...information display unit, 20... shopping server, 21... item database, 22...page generation unit, 23...purchase processing unit, 24...history database, 30...shop terminal, 40...web server, 41...toolbar providing unit, 42...toolbar storage unit, 43...keyword acquisition unit, 44...related item acquisition unit, 45...related item transmitting unit, 50...web server, 51...toolbar providing unit, 52...toolbar storage unit, 53...keyword acquisition unit, 54...keyword history database, 55...related item acquisition unit, 56...related item transmitting unit, 200...web page, 300 and 500...toolbar, 400...web browser, P1 and P3...toolbar program, P10 and P30...main module, P11 and P31...toolbar display module, P12 and P32...information display module, P2...information providing program, P20...main module, P21...toolbar providing module, P22...toolbar storage module, P23... keyword acquisition module, P24...related item acquisition module, P25...related item transmitting module, P4...information providing program, P40...main module, P41...toolbar providing module, P42...toolbar storage module, P43...keyword acquisition module, P44...keyword history storage module, P45...related item acquisition module, P46...related item transmitting module

## Claims

1. An information providing device comprising:
a first item acquisition unit configured to acquire first item information related to a first item shown on a web page displayed on a web browser of a user terminal;
a second item acquisition unit configured to acquire second item information indicating a second item related to the first item by referring to an item database storing item information based on the first item information; and
an item information transmitting unit configured to transmit the second item information to the user terminal so that the second item information is shown in a separate window displayed superimposed on the web page.

2. The information providing device according to Claim 1, wherein
the item information stored in the item database includes shop information for identifying a shop where an item is available,
the first item information includes first shop information for identifying a shop where the first item is available, and
the second item acquisition unit acquires the second item information indicating the second item available in the same shop as the first item based on the first item information.

3. The information providing device according to Claim 1 or 2, wherein
the first item acquisition unit determines whether the web page shows the first item by analyzing the web page, and acquires the first item information when determining that the web page shows the first item.

4. The information providing device according to Claim 3, wherein
the first item acquisition unit refers to a list of preset URLs for which the first item information is to be acquired, and determines that the web page shows the first item when an URL of the web page is included in the list.

5. The information providing device according to Claim 3, wherein
the first item acquisition unit determines that the web page shows the first item when a user interface for performing a purchase procedure of the first item is included in the web page.

6. The information providing device according to Claim 3, wherein
the first item acquisition unit determines that the web page shows the first item when a predetermined word related to purchase of the first item is included in the web page.

7. The information providing device according to any one of Claims 1 to 6, wherein
the first item acquisition unit specifies a group of words frequently searched for by referring to a first history database storing a history of words entered by a user to search for an item in an item search service, and then acquires a word included in the group among words extracted based on description of the web page as the first item information.

8. The information providing device according to any one of Claims 1 to 6, wherein
the first item acquisition unit includes a presentation unit configured to transmit words extracted based on description of the web page as presented words to the user terminal,
the first item acquisition unit acquires a word specified based on the presented words in the user terminal as the first item information, and
the presented words received by the user terminal are shown in the separate window.

9. The information providing device according to Claim 8, wherein
the presentation unit specifies a group of words frequently searched for by referring to a first history database storing a history of words entered by a user to search for an item in an item search service, and then determines words included in the group among words extracted based on description of the web page as the presented words.

10. The information providing device according to Claim 8, wherein
the presentation unit can refer to a second history database storing history information where user information for identifying a user, a web page acquired in past times by the first item acquisition unit, and a word based on the presented words acquired in past times by the first item acquisition unit are associated with one another, and
when the history information corresponding to a user of the user terminal and the web page currently acquired by the first item acquisition unit is stored in the second history database, the presentation unit transmits words indicated by the history information as the presented words to the user terminal.

11. The information providing device according to Claim 8, wherein
the presentation unit can refer to a second history database storing history information where user information for identifying a user, a web page acquired in past times by the first item acquisition unit, and a word based on the presented words acquired in past times by the first item acquisition unit are associated with one another, and
when the history information corresponding to a user different from a user of the user terminal and the web page currently acquired by the first item acquisition unit is stored in the second history database, the presentation unit transmits words indicated by the history information as the presented words to the user terminal.

12. The information providing device according to Claim 10 or 11, wherein
the word based on the presented words acquired in past times is a word specified in past times in a user terminal for the web page acquired in past times.

13. The information providing device according to any one of Claims 8 to 12, wherein
the presented words shown in the separate window can be edited in the user terminal.

14. The information providing device according to any one of Claims 1 to 13, wherein
the second item acquisition unit specifies items viewed or purchased by a user of the user terminal in past times as accessed items by referring to a third history database storing history data indicating a history of viewing of item pages or purchase of items by a user, and then acquires the second item information indicating the second item related to both of the first item and the accessed items by referring to the item database based on the first item information and information indicating the accessed items.

15. The information providing device according to any one of Claims 1 to 14, wherein
at least a part of the second item information is shown as a link to a web page of the second item in the separate window.

16. The information providing device according to any one of Claims 1 to 15, wherein
a user interface for selecting the second item as an item to be purchased is further shown in the separate window.

17. An information providing method executed by an information providing device, the method comprising:
a first item acquisition step of acquiring first item information related to a first item shown on a web page displayed on a web browser of a user terminal;
a second item acquisition step of acquiring second item information indicating a second item related to the first item by referring to an item database storing item information based on the first item information; and
an item information transmitting step of transmitting the second item information to the user terminal so that the second item information is shown in a separate window displayed superimposed on the web page.

18. An information providing program causing a computer to implement:
a first item acquisition unit configured to acquire first item information related to a first item shown on a web page displayed on a web browser of a user terminal;
a second item acquisition unit configured to acquire second item information indicating a second item related to the first item by referring to an item database storing item information based on the first item information; and
an item information transmitting unit configured to transmit the second item information to the user terminal so that the second item information is shown in a separate window displayed superimposed on the web page.

19. A computer-readable recording medium storing an information providing program causing a computer to implement:
a first item acquisition unit configured to acquire first item information related to a first item shown on a web page displayed on a web browser of a user terminal;
a second item acquisition unit configured to acquire second item information indicating a second item related to the first item by referring to an item database storing item information based on the first item information; and
an item information transmitting unit configured to transmit the second item information to the user terminal so that the second item information is shown in a separate window displayed superimposed on the web page.

20. An information display program causing a computer capable of communicating with an information providing device to implement:
a window display unit configured to display a separate window superimposed on a web page displayed on a web browser of the computer; and
an information display unit configured to display information received from the information providing device in the separate window, wherein
the information providing device includes:
a first item acquisition unit configured to acquire first item information related to a first item shown on a web page displayed on the web browser;
a second item acquisition unit configured to acquire second item information indicating a second item related to the first item by referring to an item database storing item information based on the first item information; and
an item information transmitting unit configured to transmit the second item information to the computer so that the second item information is shown in a separate window displayed superimposed on the web page, and
the information display unit displays the second item information in the separate window.
